**Europäisches Patentamt**

(19) **European Patent Office**

**Office européen des brevets**

(11) Veröffentlichungsnummer: **0 111 575**
**B1**

(12) # EUROPÄISCHE PATENTSCHRIFT

(45) Veröffentlichungstag der Patentschrift:
24.09.86

(21) Anmeldenummer: **82111679.5**

(22) Anmeldetag: **16.12.82**

(51) Int. Cl.⁴: **H 04 N 7/16**

(54) Dienstintegriertes Nachrichtenübertragungssystem mit einer teilnehmerseitigen Wähleinrichtung.

(43) Veröffentlichungstag der Anmeldung:
27.06.84 Patentblatt 84/26

(45) Bekanntmachung des Hinweises auf die Patenterteilung:
24.09.86 Patentblatt 86/39

(84) Benannte Vertragsstaaten:
**DE FR GB IT**

(56) Entgegenhaltungen:
EP-A-0 024 618
DE-A-2 530 542
DE-B-2 932 735
FR-A-2 305 077

IEEE INTERNATIONAL CONFERENCE ON
COMMUNICATIONS, CONFERENCE RECORD,
Band 2/3, 13.-17. Juni 1982, Philadelphia, USA,
Seiten 4D4.1 bis 4D.4.5, G.A. TOUGH et al.: "An
integrated fiber optics distribution field trial in elie,
manitoba"
PROCEEDINGS 1982 INTERNATIONAL
SYMPOSIUM ON SUBSCRIBER LOOPS AND
SERVICES, 20.-24. September 1982, Seiten 230-235,
Toronto, CA., J.R. FOX: "Initial experience with
the mitlon keynes optical fibre cable TV trial"
ICC '79 CONFERENCE RECORD, Band 3/4,
INTERNATIONAL CONFERENCE ON
COMMUNICATIONS, Boston, MA., USA, 10-14.
Juni 1979, Seiten 39.6.1 bis 39.6.5, J. MENDRIK:
"Configuration of the local telecommunications

(73) Patentinhaber: **ANT Nachrichtentechnik GmbH,**
Gerberstrasse 33, D-7150 Backnang (DE)

(72) Erfinder: **Schmack, Hans-Jürgen, Ing. grad.,**
Wunnensteinstrasse 3, D-7151 Allmersbach im Tal
(DE)

(74) Vertreter: **Schickle, Gerhard, Dipl.-Ing., ANT**
Nachrichtentechnik GmbH Patent- und
Lizenzabteilung Gerberstrasse 33, D-7150
Backnang (DE)

(56) Entgegenhaltungen: (Fortsetzung)
network in the Netherlands, in particular the
network for transmission of radio and television
signals"
NACHRICHTENTECHNISCHE ZEITSCHRIFT, Band
32, Heft 3, März 1979, Seiten 150-153, Berlin, DE., H.
BAUCH: "Künftige Kommunikationstechnik mit
Lichtleitern"

## Beschreibung

Die vorliegende Erfindung betrifft ein dienstintegriertes Nachrichtenübertragungssystem, bestehend aus einer Zentrale, welche mehrere Telekommunikationsdienste anbietet, und aus mit dieser über eine Lichtwellenleiterstrecke in Verbindung stehenden Teilnehmergeräten, wobei dem Teilnehmer zum Auswählen bestimmter Dienste eine Wähleinrichtung zur Verfügung steht in Gestalt eines kodierte Infrarot-Wahlsignale aussendenden Impulsgebers, die nach einer Umwandlung in elektrische Signale, einer Modulation eines elektrischen Trägers mit der Wählinformation und einer anschließenden elektrooptischen Umwandlung des modulierten Trägers über die Lichtwellenleiterstrecke zur Zentrale gelangen, wo sie demoduliert und dekodiert werden.

Ein derartiges dienstintegriertes Nachrichtensystem, bei dem der Teilnehmer die Möglichkeit hat, mittels einer Wähleinrichtung von einer Zentrale einen bestimmten von den dort angebotenen Telekommunikationsdiensten (z.B. UKW-, Fernsehprogramme, Bildschirmtext etc.) abzurufen, ist aus der europäischen Offenlegungschrift EP-A1-42 133 bekannt. Dazu benutzt der Teilnehmer einen mit einer Tastatur versehenen Impulsgeber, der ein kodiertes Infrarot-Wahlsignal ausstrahlt. Eine Fotodiode wandelt dieses Infrarotsignal in ein elektrisches Signal um, das anschließend dekodiert und dann einem Träger aufmoduliert wird. Wie bereits eingangs erwähnt, wird daraufhin das mit dem dekodierten Wahlsignal modulierte Trägersignal elektrooptisch umgewandelt und über die Lichtwellenleiterstrecke zur Zentrale abgesandt, wo es dann wieder demoduliert wird.

Der Schaltungsaufwand auf der Teilnehmerseite ist gemäß dieser EP-A1-42 133 relativ groß, da neben den Einrichtungen für die opto-elektrische bzw. elektro-optische Umwandlung noch Schaltungen für die Dekodierung der vom Infrarot-Impulsgeber ausgesandten Wahlsignale und die Modulation dieser dekodierten Signale vorhanden sind.

Ein einleitend dargelegtes dienstintegriertes Nachrichtenübertragungssystem, in dem die Teilnehmer über Rückkanäle an eine Zentrale Signale aussenden können, geht auch aus der DE-B1-2 932 735 hervor. In dieser Schrift ist aber nicht ausgeführt, wie die von den Infrarot-Impulsgebern abgegebenen Wahlsignale für die Übertragung zu der Zentrale aufbereitet werden.

Der Erfindung liegt nun die Aufgabe zugrunde, ein dienstintegriertes Nachrichtenübertragungssystem der eingangs genannten Art anzugeben, bei dem die teilnehmerseitige Einrichtung zur Übertragung der Wahlsignale einen möglichst geringen Schaltungsaufwand aufweist.

Erfindungsgemäß wird diese Aufgabe daduch gelöst, daß mit den in elektrische Signale umgewandelten kodierten Infrarot-Wahlsignalen, ohne diese vorher zu dekodieren, die Modulation des Trägers erfolgt.

Der Vorteil dieser Erfindung besteht darin, daß nicht mehr jedem Teilnehmer eine Schaltungsanordnung zum Dekodieren der Infrarot-Wahlsignale zugeordnet, sondern nur in der Zentrale ein Dekodierer vorhanden sein muß.

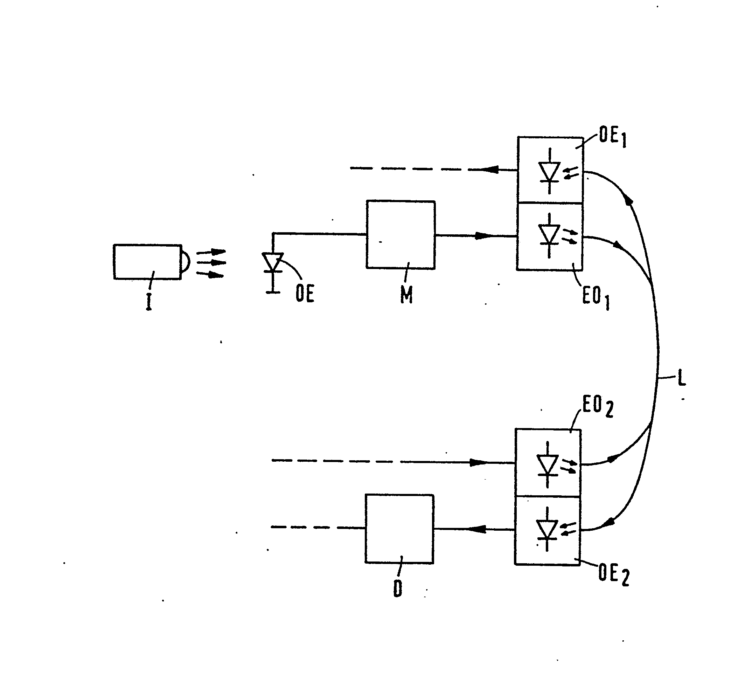

Anhand eines in der Zeichnung dargestellten Ausführungsbeispiels wird nun die Erfindung näher erläutert.

Dem Teilnehmer eines dienstintegrierten Nachrichtenübertragungssystems steht, wie die Figur zeigt, ein über eine Tastatur bedienbarer Impulsgeber I für Infrarot-Wahlsignal, zur Verfügung. Dieser Impulsgeber gibt je nach dem gewählten Telekommunikationsdienst (Radio-, Fernsehprogramme, Bildschirmtext etc.) ein bestimmtes Infrarot-Signal ab. Dabei werden im Impulsgeber die Infrarot-Wahlsignale so kodiert, daß sie für die Übertragung vom Impulsgeber zum opto-elektrischen Wandler OE möglichst störungsunanfällig sind. Der opto-elektrische Wandler in Form einer Fotodiode wandelt das Infrarot-Wahlsignal in ein entsprechendes elektrisches Signal um. Darauf wird dieses elektrische Signal, ohne es vorher zu dekodieren, einem Modulator M zugeführt, der es einem Trägersignal aufmoduliert.

Das mit dem Wahlsignal modulierte Trägersignal wird anschließend einem elektro-optischen Wandler $EO_1$ auf der Teilnehmerseite zugeführt und nach der Umwandlung über ein Lichtwellenleiterkabel zur Zentrale, welche sämtliche Telekommunikationsdienste anbietet, übertragen.

Am Eingang der Zentrale wird das optische Signal mittels eines opto-elektrischen Wandlers $OE_2$ in ein elektrisches Signal umgesetzt und dieses dann einem Demodulator und Dekodierer D zugeführt.

Gemäß der so aus dem Wahlsignal gewonnenen Information wird ein bestimmter Telekommunikationsdienst aus den vorhandenen ausgewählt. Die Information dieses Dienstes wird dann mit einem elektro-optischen Wandler $EO_2$ in ein optisches Signal umgewandelt und über das Lichtwellenleiterkabel zum Teilnehmer übertragen. Dort geschieht in einem opto-elektrischen Wandler $OE_1$ eine Rückwandlung des optischen in ein elektrisches Signal, das schließlich einer der Endeinrichtungen, wie Radioempfänger, Fernseher, Telefon etc., zugeführt wird. Die Endeinrichtung auf der Teilnehmerseite und für die Auswahl der Telekommunikationsdienste in der Zentrale sind in der Figur nicht dargestellt, da sie zur Erläuterung des Erfindungsgedanken nicht erforderlich sind.

## Patentanspruch

Dienstintegriertes Nachrichtenübertragungssystem, bestehend aus einer Zentrale, welche mehrere Telekommunikationsdienste anbietet, und aus mit dieser über eine Lichtwellenleiterstrecke in Verbindung stehenden Teilnehmergeräten, wobei dem Teilnehmer zum Auswählen bestimmter Dienste eine Wähleinrichtung zur Verfügung steht in Gestalt eines kodierte Infrarot-Wahlsignale aussendenden Impulsgebers, die nach einer Umwandlung in elektrische Signale, einer Modulation eines elektrischen Trägers mit der Wählinformation und einer anschließenden elektro-optischen Umwandlung des modulierten Trägers über die Lichtwellenleiterstrecke zur Zentrale gelangen, wo sie demoduliert und dekodiert werden, dadurch gekennzeichnet, daß mit den in elektrische Signale umgewandelten kodierten Infrarot-Wahlsignalen, ohne diese vorher zu dekodieren, die Modulation des Trägers erfolgt.

## Claim

Service-integrated communications transmission system consisting of an exchange station, which offers several telecommunications services, and of subscriber instruments standing in connection therewith by way of an optical waveguide path, wherein a selecting device for the selection of certain services stands at the disposal of the subscriber and has the structure of a pulse generator emitting coded infra-red selection signals which after a conversion into electrical signals, a modulation of an electrical carrier by the selection information and a subsequent electro-optical conversion of the modulated carrier get by way of the optical waveguide path to the exchange station, where they are demodulated and decoded, characterised thereby, that the modulstion of the carrier takes place by the coded infra-red selection signals converted into electrical signals without these being decoded previously.

## Revendication

Système de transmission de données à intégration des services, constitué d'une centrale, qui offre plusieurs services de télécommunication, et d'appareils abonnés qui sont en liaison avec cette centrale par l'intermédiaire d'un circuit conducteur à fibre optique étant précisé que l'abonné dispose pour sélectionner des services déterminés, d'un dispositif de sélection sous forme d'un émetteur d'impulsions qui envoie des signaux de sélection en infrarouge codés qui, après conversion en signaux électriques, après modulation d'une porteuse électrique avec l'information de sélection et après une conversion, qui fait suite, électro-optique de la porteuse modulée, parviennent, par l'intermédiaire du circuit conducteur à fibre optique, à la centrale où ils sont démodulés et décodés, caractérisé en ce que la modulation de la porteuse se fait avec les signaux de sélection en infrarouge codés convertis en signaux électriques, sans les décoder précédemment.